# EUROPEAN PATENT SPECIFICATION

(11) **EP 3 398 757 B1**
(45) Date of publication and mention of the grant of the patent: **25.10.2023**
(21) Application number: 17169557.0
(22) Date of filing: 04.05.2017
(51) Int. Cl.: B29C 70/30

(54) **COMPOSITE SHAFT**
VERBUNDWELLE
ARBRE COMPOSITE

(43) Date of publication of application: 07.11.2018
(60) Divisional application: 23197420.5
(73) Proprietor: Crompton Technology Group Limited, Solihul, West Midlands B90 4SS (GB)
(72) Inventor: Pollitt, William, Kenilworth, Warwickshire CV8 2AJ (GB); Wragg, Andrew, Warwick, Warwickshire CV35 7RS (GB)
(74) Representative: Dehns

(56) References cited:
- GB-A- 2 096 530
- GB-A- 2 124 735
- US-A- 3 638 455
- US-A- 4 292 368
- US-A- 4 693 140
- US-A- 5 820 483

## Description

### Technical Field

This disclosure relates to composite shafts and in particular to ways of joining composite shafts to other parts. The disclosure has particular applicability to tie rods and transmission shafts for aerospace applications, although it can also readily be applied to many other uses.

### Background

Composite shafts are typically formed from Polymer Matrix Composites (PMCs) which comprise some form of fibre or polymer encased within a matrix such as resin. One example is Carbon Fibre Reinforced Polymer (CFRP). Filament wound structures are typically formed by winding filaments such as carbon fibres around a mandrel in a helical fashion so as to build up a tube shaped shaft. The angle of the helical winding influences the properties of the shaft. For example, windings approaching 45 degrees have higher torsional properties and those higher than 45 degrees have greater properties in the hoop direction (i.e. circumferential direction, substantially perpendicular to the winding axis). About 45 degrees is generally optimal for torque transmission. Other techniques for manufacturing PMCs include braiding, fibre placement techniques (including AFP), prepreg wrap techniques and pultrusion methods. Composite shafts may involve several layers, with different layers having different properties. For example, the fibre angle may be varied between layers to give different properties such as for bending resistance or impact resistance, axial stiffness, lateral stiffness or torque capability.

Interfacing with PMC rods can be challenging due to the reduced bearing strength. Standard fixings designed to interface with metal are not usually suitable and therefore the normal solution is to interface with the PMC rod via a metal part that is fitted onto the rod. However metal parts add weight and cost to the overall part. This detracts from the weight and cost savings which are among the greatest advantages of using PMCs in the first place.

It is desirable that the connection between the shaft and other components be structurally efficient so as to minimise weight while ensuring good force transmission and good joint robustness.

US 4292368 describes a connecting rod in which fibres are wound over a compressible foam mandrel and then the ends of the assembly are flattened in a mould. GB 2096530 describes a structural component for aircraft in which a flexible hose is fitted over a mandrel and fibres are wound over the hose. The hose is inflated and the mandrel removed and then a mould is used to form end portions before curing. Finally the hose is deflated and removed.

### Summary

According to a first aspect of this invention, a method for forming a composite shaft is provided in accordance with claim 1.

According to this disclosure, there is provided a composite fibre-reinforced polymer shaft having a hollow cylindrical portion and a shaped end portion, the shaped end portion being moulded from a hollow cylindrical shape prior to curing.

By moulding the end portion from a hollow cylindrical shape, the shaped end portion can be formed into a desired shape easily and quickly from a shape that is easy and efficient to produce by normal winding techniques. The cylindrical shape is preferably an extension of the hollow cylindrical portion that forms the rest of the shaft such that the fibres that form the main cylindrical shaft extend across from the main cylindrical shaft into the end portion, thus providing excellent load transmission properties along the shaft.

It will be appreciated that the terms "cylinder" and "cylindrical" are used here in a general sense so encompass cylinders of various cross-sections, including circular cross-section cylinders, square cross-section cylinders or indeed any arbitrary cross-section shape cylinder. Generally, convex cross-sectional shapes are preferred to avoid or minimise fibre bridging across any channels or valleys in the shape, but such shapes are not excluded here.

Although other end shaping techniques are known, these generally involve winding fibres onto a suitable shaped mandrel so as to form the desired shape during winding rather than after winding. Shaping the end portion from a cylindrical shape allows the whole volume of fibre to be wound on a cylindrical mandrel using conventional techniques without having to use very specific winding processes over a shaped mandrel. The moulding of the cylindrical shape will generally require a slightly greater volume of fibre than would be required for a direct shaping-while-winding process, but has been found to produce a strong end shape that can be used for connection to other equipment. This has the advantage of avoiding the need for metal end connections that are both heavy and expensive to produce and fit. The lighter weight connection made from fibre-reinforced polymer is faster to produce, less expensive to produce and results in a lighter weight overall component.

The fibre pattern in the end product formed by moulding the hollow cylindrical shape, e.g. by compressing it into the moulded form, will be different from the fibre pattern that is produced by winding directly over a shaped mandrel, even if this results in the same shape of end product. In particular, the changes in fibre angles with geometry will be different for a moulded product than for a directly-wound product.

The shaped end portion may take any suitable form for creating a strong connection to other equipment. However, in some preferred examples, the shaped end portion comprises a tapered portion comprising two substantially planar tapers angled towards each other. The tapered portions provide a gradient region away from the cylindrical main shaft so that the fibres do not deviate at too steep an angle. The substantially planar tapers taper the structure towards a line rather than towards a point (such as a conical taper would). The tapers do not need to have an absolutely planar shape which would involve a sharp change in angle from the main shaft into the tapered section, but rather may have a curved transition from the cylindrical portion into the tapered portion. The whole of the tapered portion may be slightly curved or the curved transition may change to a fully planar taper. An "S" curve profile may also be used to aid a smooth transition to the flat portion of the part.

The moulding of the hollow cylindrical shape to form the shaped end portion moves the uncured material (fibre and resin). It could to a limited extent be compressed and/or stretched in parts, but in preferred examples the moulding changes the shape by moving the fibres and resin without significant compression or stretching. For example, in preferred examples the thickness of the hollow cylindrical shape is relatively thin compared with the diameter of the mandrel on which it is wound (i.e. the inner diameter of the hollow cylindrical part). In some examples (discussed further below), the hollow cylindrical shape is squashed to form a flattened end portion. If this process does not significantly alter the density of fibres then the width of the flattened section will be about equal to half the circumference of the hollow cylindrical shape from which it is formed. It will be appreciated that this width will be wider than the original diameter, i.e. the shaped end portion may be wider than the rest of the shaft. More generally unless more complex shaping techniques are used, the circumference of the shaped end portion will substantially equal the circumference of the hollow cylindrical shape from which it was formed.

The shaft may simply end with the tapered portion, but this does not generally provide an adequate surface for attaching other components or equipment. Therefore the shaped end portion may comprise an axially extending portion. In preferred examples the shaped end portion comprises a substantially flat portion. The flat portion is preferably parallel to the shaft axis. The flat portion is formed by flattening the unsupported cylindrical portion by compressing the two sides of that unsupported cylindrical portion together. The flat portion may be generally flat, but with some shaping that facilitates connection to other components or equipment. For example it may have teeth, grooves or ridges formed therein, either on the generally flat surfaces or on the sides thereof. However, in particularly preferred examples the flat portion is substantially flat (with two parallel flat surfaces) and has one or more holes formed therethrough for allowing a connecting pin to pass through. Such holes may be formed by any suitable technique such as by winding around a removable pin during the winding process (this avoids cutting the fibres), but in simple forms may simply be drilled through the cured component. The flat portion may have a slightly thicker region formed around the hole(s) to provide greater strength around the hole(s).

The shaped end portion may of course comprise both the tapered portion and the flat portion (or other shaped axially extending portion), with the tapered portion being interposed between the flat portion (or axially extending portion) and the main cylindrical shaft. Thus the tapered portion provides a transition region in which fibres are drawn down from the cylindrical portion to the flat portion.

The shaped end portion may be formed by moulding it such that the unsupported cylindrical fibres are not squeezed together to close off the shaft (i.e. to close one end of the hollow shaft). By leaving a gap in the end (which may be achieved for example by providing structural foam or other material as a support during moulding), it may be possible to insert connecting elements through the gap to provide a connection. If structural material is used, it may be removed such that a gap remains when the material is removed, or it may be left in place as additional structural support for the end product. Thus, in some examples, the shaped end portion may surround a support block. The support block may be a structural foam or other light weight material (lighter than the metal used in traditional end fittings), providing support to allow a greater variety of end portion shapes to be formed.

However, in some examples, the shaped end portion closes the end of the cylindrical shaft portion, i.e. providing a closed end to the hollow shaft, leaving no gap or hole therethrough to communicate with the hollow interior. This simplifies the shaping of the end portion as the unsupported cylindrical fibres are simply squeezed or compressed together into the desired shape, typically bringing opposite sides of the unsupported cylinder together until they meet. Curing will bond these two opposite sides together such that they form a single strong and secure attachment point for the shaft.

The cylindrical shaft and the unsupported cylindrical fibres may simply be formed in a single winding process (which may of course comprise multiple layers of fibre winding, braiding or other fibre placement). The shaped end portion is thus formed from the same set of fibre layers as the rest of the shaft. However, in some examples the shaped end portion may require additional strengthening to give it enough strength to interface with other components, e.g. via a hole and pin arrangement. Therefore the shaft comprises one or more additional reinforcement layers of fibre on the shaped end portion. Such additional reinforcement layers are the outermost layer of fibres wound onto the end portion and are formed prior to the shaping taking place, i.e. prior to any squashing or compressing of the unsupported fibres. The one or more additional reinforcement layers preferably extend from the shaped end portion at least partially onto the hollow cylindrical portion so that they bridge the structure of the shaped end portion, providing some connection to the main cylindrical shaft portion. Thus, in some preferred examples, the additional reinforcement fibres are formed over a shaped flat end portion, a shaped taper portion between the flat portion and the main cylindrical portion and partly over the main cylindrical portion.

The method may be used to form any of the composite shafts with shaped end portions described above. The two part mandrel allows the main cylindrical shaft portion to remain supported, thus keeping its shape during the curing process, while the removable second mandrel part allows the unsupported fibres to be shaped prior to curing so that the shaped end portion is cured in the desired shape. It will be appreciated that more than one removable mandrel part may be used (e.g. two or more removable mandrel parts). These may include one or more dissolvable parts that are fully removed, and one or more captive parts that remain inside the shaft after moulding.

It will be appreciated that any fibre placement techniques may be used, including filament winding or braiding techniques. Resin may be applied to the fibres at any suitable point in the process as is well known, e.g. using prepreg fibres, towing fibres through resin baths during placement, or submerging the formed part in resin after fibre placement (or a combination of these techniques).

The second mandrel part can be removed from the side of the shaft that is to be shaped, leaving the first mandrel part in place. The shaping will normally close off or partially close off the end of the shaft such that the first mandrel part cannot be removed through the same end after curing unless there is a small hole or gap and the mandrel can be dismantled. Thus the first mandrel part generally needs to be extracted after curing from the opposite end of the shaft making this end shaping process unsuitable for shaping both ends of a shaft (at least without using some other more complex mandrel removal technique such as dissolvable mandrels).

The moulding process may involve any kind of shaping technique, but in many examples will include compressing the unsupported fibres.

The two mandrel parts may simply be two cylinders abutting against one another. However, preferably the first mandrel part has a male end portion and the second mandrel part has a female portion that mates with the male portion such that the first part and second part together form a cylinder.. Again, it will be appreciated that the cylinder (or parts thereof) need not be of circular cross-section, but may be of square cross-section, elliptical cross-section or indeed any general cross-section shape. The two mandrel parts will generally have the same cross-sectional shape and size so that together they form an overall cylinder of uniform size and cross-section. The male portion can then be suitably shaped so as to assist with the shaping of the unsupported end portion. For example, the male portion may be tapered so as to assist with formation of a tapered portion of the shaft end portion as discussed above. Thus the male portion may be shaped to have two planar surfaces or substantially planar surfaces that taper together. These surfaces may have a curved transition to join them to the main cylindrical outer surface of the first mandrel part.

When mated together the first and second mandrel parts ideally form a cylindrical shape, so if the first mandrel part has a shaped male portion, the second mandrel part has a shaped female portion that can accommodate the male portion. The female portion may form a larger cavity than is required to accommodate the male portion, or it may have a corresponding (but inverse) shape so that the male portion and female portion are in substantially full contact with each other. This latter arrangement is convenient where it is possible to form both the male and female portions (and thus the first and second mandrel parts) from a single cylindrical mandrel, e.g. by cutting through the mandrel. For example two planar tapered surfaces can be formed by cutting through the mandrel along the two planes. Or for a curved surface as discussed above, a wire erosion cutting technique may be used. Either way, the result is a male portion and a female portion with mating surfaces.

Alternatively, the second (female) mandrel part may be of smaller diameter than the first (male) mandrel part. This reduction in diameter means that the diameter of the unsupported fibre cylinder created upon removal of the second mandrel part is smaller than the diameter of the rest of the shaft. With this arrangement, when the moulding/compressing results in a widening of the shaped end portion, the width of the final shaped end portion may be reduced, preferably to a size no greater than the diameter of the rest of the shaft. Thus the overall diameter of the combined shaft and end portion can be maintained within the dimensions expected of existing parts. In such arrangements the width of the shaped end portion may still be wider than the hollow unsupported cylinder from which it is formed (i.e. determined by the diameter of the second mandrel part), even when it remains narrower than the rest of the shaft (determined by the diameter of the first mandrel part).

As described above, the unsupported fibres are preferably compressed in a mould to form the shaped end. The male end portion may form part of this mould, supporting the fibres from the inside during the moulding process. The other side of the mould may be a separate mould that is brought over the unsupported fibres so as to guide them and compress them into the desired end shape. This separate mould may be brought into contact with at least part of the outer surface of the unsupported fibres by moving it axially relative to the shaft in the direction towards the shaft. Thus the mould may have a substantially flat section to receive and compress together fibres from opposite sides of the unsupported cylinder. The first mandrel part preferably has a male end portion and the mould preferably has a female portion corresponding to the shape of the male end portion. The female portion may have a tapered section (e.g. to match the taper of the male end of the first mandrel part) and a rectangular cavity to from a flattened section as discussed above as a strong connection surface for connecting to other components or equipment.

While the mould may be brought into contact axially, it may also be brought into contact with the fibres radially (or a combination of axially and radially), in which case the mould will need to be open (at least temporarily) on at least one side. This opening may be closed off, e.g. by applying consolidation tape across the opening or by bringing another mould part into contact to close the opening. Such use of tape or an additional mould part can avoid fibre pinching that may occur if two mould parts are just brought together from either side.

The female mould part may have a through hole so that excess fibres (e.g. excess length of the unsupported fibre cylinder) can be threaded through or squeezed out through the hole where they can be trimmed so as to remove the unwanted excess.

The outer (female) mould part may of course comprise more than one mould part, the parts being brought together so as to compress the unsupported fibre cylinder. This may be useful where the profile is to include significant external shaping such as teeth or ridges on the outside of the moulded part. Removal of a two-part female mould part will be easier after curing.

As discussed above, it may be desirable to form an additional reinforcement layer of fibres around the shaped end portion (or rather around the section of cylindrical fibre that will become the unsupported section and then the shaped end portion). Therefore preferably winding fibres around the first and second mandrel parts comprises: winding fibres around the combination of the first and second mandrel parts; and winding at least one additional layer of reinforcement fibres around the second mandrel part and optionally overlapping partly over the first mandrel part. It will be appreciated that this additional reinforcement layer is also compressed by the mould during the end shaping process and thus thickens and strengthens the shaped end portion.

As discussed above, a structural support block may be provided inside the unsupported fibres and the compressing step may comprise compressing the unsupported fibres around the structural support block. The structural support block may be a mandrel part that is not removed, or it may be a separate part inserted inside the unsupported fibre cylinder after the removable mandrel part has been removed and before compression/moulding takes place. The support block may be a structural foam or other lightweight material that enhances the strength of the end product, while allowing a greater variety of shapes to be formed.

The method preferably further comprises curing the composite shaft after the compressing step. As discussed above, the shaping of the end portion takes place before curing of the composite. The resin may be applied to the fibres at any suitable part of the process, but the curing takes place after the shaping so that the end portion is cured in its moulded form, thus forming a rigid and strong end shape for attachment to other components or equipment.

Overall, the shaft and method provide a lightweight and strong composite shaft that does not require separate metal end fittings for attachment to or interfacing with other parts. This reduces the cost of the part as well as the weight of the part and is therefore highly beneficial.

### Brief description of drawings

One or more non-limiting examples will now be described, by way of example only, and with reference to the accompanying figures in which:
Fig. 1 shows a cross-section of a two part mandrel with fibre wound around it;
Fig. 2 shows the mandrel of Fig. 1 with one mandrel part removed and a mould applied to the end of the wound fibres;
Fig. 3 shows the composite shaft in cross-section after curing and mandrel removal;
Fig. 4 shows a perspective view of a shaped end portion; and
Fig. 5 shows an alternative example in which the shaped end portion does not completely close off the shaft.

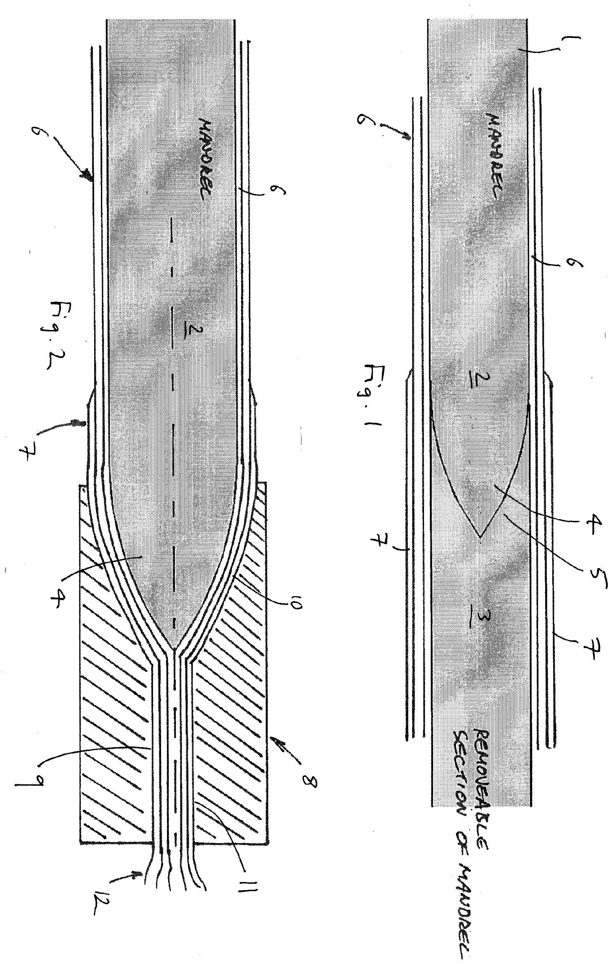

Fig. 1 shows a cylindrical mandrel 1 that is formed from two parts; a first mandrel part 2 and a second mandrel part 3. The first mandrel part 2 has a male end portion 4 that mates with a correspondingly shaped female end portion 5 of second mandrel part 3. These two mandrel parts 2, 3 have been formed from a single long mandrel which has been cut through by wire erosion so as to form the two correspondingly shaped parts 2, 3 and end portions 4, 5.

Cylindrical fibre layers 6 have been wound onto the combined mandrel 1 using standard fibre placement techniques such as filament winding. These fibre layers 6 have been wound over both the first mandrel part 2 and the second mandrel part 3 which are together acting like a single long mandrel 1. An additional reinforcement fibre layer 7 has been wound over the second mandrel part 3, overlapping the join between the first mandrel part 2 and the second mandrel part 3 and also very slightly overlapping onto the main cylindrical body of the first mandrel part 2. This reinforces the section over the second mandrel part 3.

Fig. 2 shows the fibres 6 and 7 of Fig.1 after the second mandrel part 3 has been removed (simply by drawing it out to the right in the figure). The first mandrel part 2 remains inside the wound fibres 6, providing support to them so that they maintain their shape during subsequent curing. However the region of fibres 6 that was previously supported by second mandrel part 3 has been compressed by mould part 8 to from a shaped end portion 9. The mould 8 has a tapered cavity 10 and a rectangular cavity 11 which has substantially flat faces. The shape of the tapered cavity 10 matches the shape of the male end portion 4 of first mandrel part 2 so that the fibres 6, 7 are securely held between the first mandrel part 2 and the mould 8 . The cross-sectional area of the rectangular cavity 11 is sized so as to accommodate the cross-section of composite material that makes up the cylinder of unsupported fibres. In this example the rectangular cavity 11 has a substantially rectangular shape in cross-section, thus forming the unsupported cylinder into a flat planar part 12 with a corresponding rectangular cross-section that can be used for attaching the composite shaft to other components or equipment without the use of additional metal end fittings. The rectangular cavity 11 forms a through hole through mould 8 so that excess fibres protrude out of the end of the mould 8 where they can be trimmed, preferably after curing as indicated at 12.

After curing, the first mandrel part 2 can be extracted towards the left in Fig. 2 and the mould 8 can be extracted towards the right, thus leaving a hollow cylindrical shaft with a shaped end portion comprising a tapered portion connecting the hollow cylindrical part to a flat end part for connection to other equipment. It can be appreciated that the mould 8 shown in Fig. 2 fully compresses the unsupported fibres that were wrapped around second mandrel part 3, joining the two opposite sides of the cylinder together into the flat portion where they are firmly secured together during the curing process. This fully closes off one end of the composite shaft. The other end may remain open where the first mandrel part 2 was extracted.

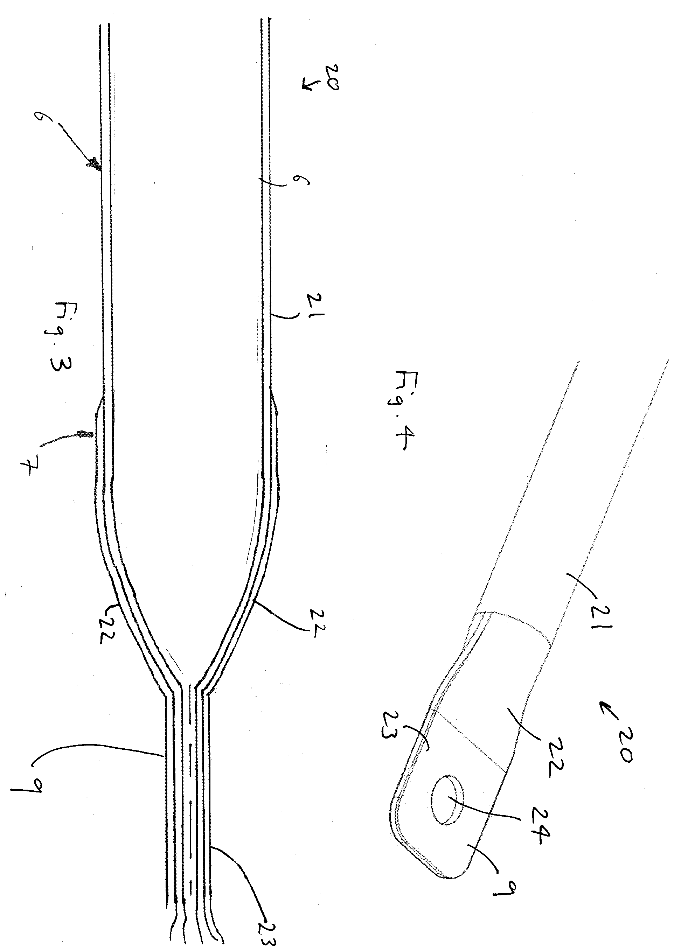

Fig. 3 shows a composite fibre-reinforced polymer shaft 20 formed after removal of the mandrel part 4 from Fig. 2. The shaft 20 has a hollow cylindrical portion 21 and a shaped end portion 9. The shaped end portion 9 may include a tapered portion formed from two substantially planar tapers 22 and a flat portion 23.

Fig. 4 shows another view of the composite shaft 20 of Fig. 3. A hole 24 can be seen formed in the flat portion 23. The hole 24 can be used for connection to other equipment, e.g. via a bolt or pin passed therethrough.

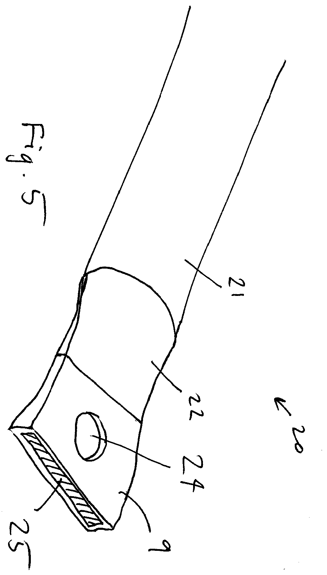

In Fig. 4 the flat potion 23 completely closes off the end of the shaft 20. Fig. 5 shows an alternative example in which the shaped end portion 9 does not completely close off the shaft 20, but instead is formed around a support block 25. The support block 25 may be provided as a mould part to support the inside of the flat portion 23 during moulding and curing. It may later be removed after the moulding and curing so that the shaft 20 is not closed off. Alternatively, the block 25 may be left in place to form a structural part of the shaft 20 (in which case the shaft is still closed off, but by the block 25 rather than by the shaped end portion 9).

## Claims

1. A method of forming a composite shaft (20) comprising:
winding fibres around a mandrel (1), the mandrel comprising at least a first part (2) and a second part (3) separable from the first part (2); **characterized by**:
removing at least one part (3) of the mandrel (1) so as to leave a cylinder of unsupported fibres; and
moulding the unsupported fibres to form a shaped end (9) of the composite shaft (20).

2. A method as claimed in claim 1, wherein the first mandrel part (2) has a male end portion and the second mandrel part (3) has a female portion that mates with the male section such that the first part (2) and second part (3) together form a cylinder.

3. A method as claimed in any preceding claim, wherein the unsupported fibres are compressed in a mould (8) to form the shaped end (9).

4. A method as claimed in claim 3, wherein the mould (8) has a substantially flat section (11) to receive and compress together fibres (6) from opposite sides of the unsupported cylinder.

5. A method as claimed in claim 3 or 4, wherein the first mandrel part (2) has a male end portion and wherein the mould (8) has a female portion corresponding to the shape of the male end portion.

6. A method as claimed in any preceding claim, wherein winding fibres around the first and second mandrel parts (2, 3) comprises:
winding fibres (6) around the combination of the first and second mandrel parts (2, 3); and
winding at least one additional layer of reinforcement fibres (7) around the second mandrel part (3) and optionally overlapping partly over the first mandrel part (2).

7. A method as claimed in any preceding claim, wherein the moulding step comprises compressing the unsupported fibres around a structural support block (25).

8. A method as claimed in any preceding claim, further comprising curing the composite shaft (20) after the moulding step.

## Patentansprüche

1. Verfahren zum Bilden einer Verbundwelle (20), umfassend: Wickeln von Fasern um einen Dorn (1), wobei der Dorn mindestens einen ersten Teil (2) und einen zweiten Teil (3), der vom ersten Teil (2) trennbar ist, umfasst; **gekennzeichnet durch**:
Entfernen mindestens eines Teils (3) des Dorns (1), so dass ein Zylinder aus ungestützten Fasern übrig bleibt; und
Formen der ungestützten Fasern, um ein Formende (9) der Verbundwelle (20) zu bilden.

2. Verfahren nach Anspruch 1, wobei der erste Dornteil (2) einen männlichen Endabschnitt und der zweite Dornteil (3) einen weiblichen Abschnitt aufweist, der mit dem männlichen Abschnitt zusammenpasst, so dass der erste Teil (2) und der zweite Teil (3) zusammen einen Zylinder bilden.

3. Verfahren nach einem der vorhergehenden Ansprüche, wobei die ungestützten Fasern in einer Form (8) komprimiert werden, um das Formende (9) zu bilden.

4. Verfahren nach Anspruch 3, wobei die Form (8) einen im Wesentlichen flachen Bereich (11) aufweist, um Fasern (6) von gegenüberliegenden Seiten des ungestützten Zylinders aufzunehmen und zusammen zu komprimieren.

5. Verfahren nach Anspruch 3 oder 4, wobei der erste Dornteil (2) einen männlichen Endabschnitt aufweist und wobei die Form (8) einen weiblichen Abschnitt aufweist, welcher der Form des männlichen Endabschnitts entspricht.

6. Verfahren nach einem der vorhergehenden Ansprüche, wobei Wickeln von Fasern um den ersten und den zweiten Dornteil (2, 3) Folgendes umfasst:
Wickeln von Fasern (6) um die Kombination aus dem ersten und dem zweiten Dornteil (2, 3); und
Wickeln mindestens einer zusätzlichen Schicht aus Verstärkungsfasern (7) um den zweiten Dornteil (3) und wahlweise teilweise überlappend über den ersten Dornteil (2).

7. Verfahren nach einem der vorhergehenden Ansprüche, wobei der Schritt des Formens Komprimieren der ungestützten Fasern um einen strukturellen Stützblock (25) herum umfasst.

8. Verfahren nach einem der vorhergehenden Ansprüche, das ferner Aushärten der Verbundwelle (20) nach dem Schritt des Formens umfasst.

## Revendications

1. Procédé de formation d'un arbre composite (20) comprenant :
l'enroulement de fibres autour d'un mandrin (1), le mandrin comprenant au moins une première partie (2) et une seconde partie (3) séparable de la première partie (2) ; **caractérisé par** :
le retrait d'au moins une partie (3) du mandrin (1) de manière à laisser un cylindre de fibres non supportées ; et
le moulage des fibres non supportées pour former une extrémité profilée (9) de l'arbre composite (20).

2. Procédé selon la revendication 1, dans lequel la première partie de mandrin (2) a une partie d'extrémité mâle et la seconde partie de mandrin (3) a une partie femelle qui s'accouple avec la section mâle de sorte que la première partie (2) et la seconde partie (3) forment ensemble un cylindre.

3. Procédé selon une quelconque revendication précédente, dans lequel les fibres non supportées sont comprimées dans un moule (8) pour former l'extrémité façonnée (9).

4. Procédé selon la revendication 3, dans lequel le moule (8) a une section sensiblement plate (11) pour recevoir et comprimer ensemble des fibres (6) des côtés opposés du cylindre non supporté.

5. Procédé selon la revendication 3 ou 4, dans lequel la première partie de mandrin (2) a une partie d'extrémité mâle et dans lequel le moule (8) a une partie femelle correspondant à la forme de la partie d'extrémité mâle.

6. Procédé selon une quelconque revendication précédente, dans lequel l'enroulement de fibres autour des première et seconde parties de mandrin (2, 3) comprend :
l'enroulement de fibres (6) autour de la combinaison des première et seconde parties de mandrin (2, 3) ; et
l'enroulement d'au moins une couche supplémentaire de fibres de renforcement (7) autour de la seconde partie de mandrin (3) et éventuellement le chevauchement partiel sur la première partie de mandrin (2).

7. Procédé selon une quelconque revendication précédente, dans lequel l'étape de moulage comprend la compression des fibres non supportées autour d'un bloc de support structurel (25).

8. Procédé selon une quelconque revendication précédente, comprenant en outre le durcissement de l'arbre composite (20) après l'étape de moulage.
